(19) Europäisches Patentamt
European Patent Office
Office européen des brevets

(11) Veröffentlichungsnummer: **0 066 074**
**B1**

(12) # EUROPÄISCHE PATENTSCHRIFT

(45) Veröffentlichungstag der Patentschrift: **18.12.85**

(51) Int. Cl.⁴: **C 08 G 77/54,** C 08 G 77/26, C 08 G 77/04, C 07 F 7/18

(21) Anmeldenummer: **82103294.3**

(22) Anmeldetag: **20.04.82**

(54) **Polymere tertiäre und sekundäre Organosiloxanamine, ihre Herstellung und Verwendung.**

(30) Priorität: **21.05.81 DE 3120214**

(43) Veröffentlichungstag der Anmeldung: **08.12.82 Patentblatt 82/49**

(45) Bekanntmachung des Hinweises auf die Patenterteilung: **18.12.85 Patentblatt 85/51**

(84) Benannte Vertragsstaaten: **AT BE CH DE FR GB IT LI NL**

(56) Entgegenhaltungen:
**DE - A - 2 834 691**
**DE - C - 902 190**
**FR - A - 2 488 263**
**US - A - 2 832 754**

**Die Akte enthält technische Angaben, die nach dem Eingang der Anmeldung eingereicht wurden und die nicht in dieser Patentschrift enthalten sind.**

(73) Patentinhaber: **Degussa Aktiengesellschaft, Weissfrauenstrasse 9, D-6000 Frankfurt am Main 1 (DE)**

(72) Erfinder: **Panster, Peter, Dr., Im Lochseif 8, D-6458 Rodenbach (DE)**
Erfinder: **Kleinschmit, Peter, Dr., Wildaustrasse 19, D-6450 Hanau 9 (DE)**
Erfinder: **Buder, Wolfgang, Dr., In der Gartel 1, D-6458 Rodenbach (DE)**

**EP 0 066 074 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft polymere tertiäre oder sekundäre Organosiloxanamine, die gegenüber bekannten polymeren Aminen auf organischer Basis oder trägerfixierten Aminen eine Reihe von Vorteilen besitzen. Gleichzeitig werden Verfahren zur Herstellung dieser neuen Produkte beschrieben.

Weitgehend unlösliche Aminbasen auf Basis organischer Polymerer besitzen ein breites Einsatzgebiet in der chemischen Synthese und Anwendung. Im Zuge einer heterogenen Reaktionsführung können sie z.B. zur Neutralisation von Lösungen und Flüssigkeiten, als schwach basischer Ionenaustauscher, als Adsorber, als Wirkstoffträger, als Träger heterogenisierter homogener Katalysatoren oder generell als heterogene Base bei gängigen organischen Reaktionen, z.B. bei der Aldolkondensationsreaktion, eingesetzt werden.

Ein Beispiel für eine dieser möglichen Anwendungen ist u.a. in der europäischen Patentschrift 0 014 225 beschrieben.

Nachteilig für den Einsatz der Polymerbasen wirkt sich jedoch oft die organische Natur der Matrix aus, deren mechanische, thermische und chemische Resistenz nicht den Anforderungen genügt, denn organische Polymere besitzen keine festliegende Struktur, ihre Konformation und damit Volumen und Oberfläche der einzelnen Partikel hängen stark von äusseren Parametern wie Temperatur, Druck, und Lösungsmittel ab. Für einen effektiven Einsatz ist weiterhin meist ein Quellen der Polymeren im verwendeten Lösungsmittel notwendig, um ein Vordringen der Reaktionspartner zu den Aminzentren zu ermöglichen. Diese Nachteile weisen dagegen anorganische Polymersysteme, wie z.B. gefällte oder pyrogene Kieselsäuren, Aluminiumoxid oder Titandioxid nicht auf, denn sie besitzen eine festliegende Struktur, die funktionellen Einheiten sitzen an der Oberfläche und sind somit leichter für einen möglichen Reaktionspartner erreichbar; ihre Temperatur- und Alterungsbeständigkeit ist ausserdem bei weitem höher als die organischer Polymerer. Es ist daher naheliegend, dass bereits versucht wurde, heterogene Aminbasen z.B. durch Funktionalisierung von Kieselsäuren unter Verwendung von Aminoalkyl(alkoxi)silanen herzustellen. Beispiele hierfür sind u.a. in der britischen Patentschrift 1 506 226 beschrieben. Einen gravierenden Nachteil besitzen anorganische Polymersysteme allerdings wiederum insofern, als die Anzahl reaktiver Gruppen, über die eine Funktionalisierung mit z.B. Aminoakyl(alkoxi)silanen erfolgen kann, relativ begrenzt ist, so dass ein ungünstig niedriges Amin/Träger-Verhältnis vorliegt und viel störender Trägerballast in Kauf genommen wird. Die Herstellung derart heterogenisierter Amine ist ausserdem umständlich, aufwendig und kostspielig.

Es konnten nun neue unlösliche Aminbasen gefunden werden, die sich dadurch auszeichnen, dass sie in bezug auf die Matrixeigenschaften die Vorteile der anorganischen Trägermaterialien besitzen, jedoch nicht deren Nachteile, denn sie weisen einen wesentlich höheren Stickstoffgehalt pro Gewichtseinheit als diese auf, und die funktionellen Gruppen sind nicht über die kinetisch labilen Si-O-Si-Bindungen, sondern über inertere Si-C-Bindungen fixiert. Überraschenderweise zeigte sich nämlich, dass bei Hydrolyse und Kondensation von sekundären und tertiären Aminen, an denen mindestens zwei organische Reste mit je einem trifunktionellen Siliciumatom in Gestalt einer Trialkoxisilylgruppierung substituiert sind, keine löslichen, sondern völlig unlösliche, sehr inerte, polymere Feststoffe mit Kieselgelcharakter gebildet werden. Dieses Verhalten ist deswegen so unerwartet, weil sich bei einer entsprechenden Behandlung primärer Amine, die an ihrem organischen Rest eine Trialkoxisilylgruppierung tragen, wie z.B. Aminopropyl(triethoxi)silan oder Aminoisobutyltriethoxisilan gemäss den deutschen Patentschriften 1 023 462 und 1 158 071 keine unlöslichen, sondern lösliche Polykondensate bilden, deren Struktureinheiten z.B. im Fall der erstgenannten Verbindung durch die Formel $H_2N\text{-}CH_2CH_2CH_2SiO_{3/2}$ beschrieben werden können.

Das polymere Trägergerüst der erfindungsgemässen Verbindungen, das aus intra- und intermolekularen Siloxaneinheiten aufgebaut ist und durch Hydrolyse und Kondensation von mindestens 2 pro Stickstoffatom vorhandener Organyltrialkoxisilylgruppen erzeugt wird, bedingt ähnliche physikalische Eigenschaften der Polymerbasen, wie sie Kieselgele oder Kieselsäuren besitzen, d.h. gute mechanische und thermische Resistenz und Unabhängigkeit von Struktur und Konsistenz von äusseren Parametern wie Druck, Temperatur und Lösungsmittel innerhalb weiter Grenzen.

Der durch Polykondensation gebildete Feststoff besitzt die nach Abspaltung der funktionellen Gruppen zu erwartende analytische Zusammensetzung, sein chemisches Verhalten bestätigt, dass die Struktur der Amineinheiten durch diese «Heterogenisierung» im wesentlichen nicht verändert wird. Die Matrix dieser polymeren Amine lässt sich quasi massgeschneidert herstellen, z.B. in bezug auf den gegebenenfalls bei Verwendung der polymeren Amine als Katalysatorträger wichtigen Aspekt, dass die Amindichte durch den Einbau sogenannter Vernetzer, z.B. durch Mischen der Monomerstufe mit Tetraalkoxisilanen, Tetraalkoxititanaten oder Trialkoxialuminiumverbindungen und anschliessende Hydrolyse, gesteuert werden kann. Eine Cohydrolyse der monomeren Aminvorstufen mit den Tetrahalogeniden des Siliciums, Titans und den Trihalogeniden des Aluminiums ist ebenfalls möglich, aufgrund der anschliessend noch erforderlichen Deprotonierung des polymeren Amins jedoch aufwendiger und ungünstiger.

Die polymeren, gegebenenfalls vernetzten, tertiären oder sekundären Organosiloxanamine sind demzufolge gekennzeichnet durch die allgemeine Formel

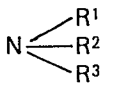

(1)

($R^1$ und $R^2$ = Gruppe der Formel

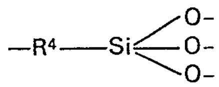

(2),

$R^4$ = Alkylen mit 1 bis 10 C-Atomen oder Cycloalkylen mit 5 bis 8 C-Atomen oder Reste der Formeln

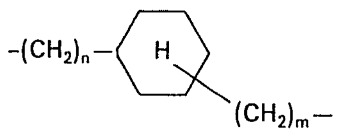

bzw. 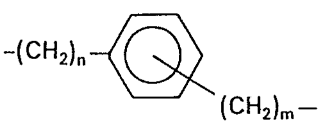

n = 1 bis 6 (am Stickstoff)
m = 0 bis 6 (am Silicium),
$R^1$ und $R^2$ gleich oder verschieden, wobei die freien Valenzen der Sauerstoffatome entweder durch Siliciumatome weiterer Gruppen der Formel (2) oder durch Siliciumatome weiterer Gruppen der Formel (2) und durch vernetzende Brückenglieder

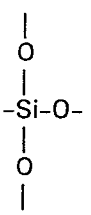 oder 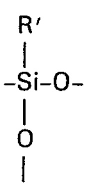 oder 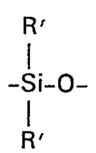 bzw.

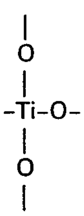 oder 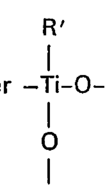 oder 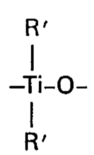 bzw.

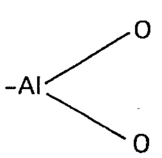 oder

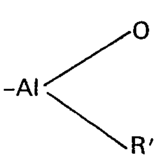

oder nur durch vernetzende Brückenglieder dieser Art abgesättigt sind;

R′ = Methyl oder Ethyl; Verhältnis der Siliciumatome in (2) zu den Brückenatomen Silicium, Titan, Aluminium = 1:0 bis 1:10;
$R^3$ = $R^1$ oder $R^2$ oder Wasserstoff, eine lineare oder verzweigte Alkylgruppe mit 1 bis 10 C-Atomen oder eine Cycloalkylgruppe mit 5 bis 8 C-Atomen oder die Benzylgruppe).
$R^4$ kann dabei eine lineare oder verzweigte Alkylengruppe sein und eine bevorzugte Zusammensetzung der neuen polymeren Basen nach Formel (1) sieht vor, dass $R^1$, $R^2$ und $R^3$ miteinander identisch sind.

Diese Polymeren zeigen nämlich besondere Stabilität und Unempfindlichkeit gegenüber chemischen Angriffen und zeichnen sich auch durch die höchste Beständigkeit gegenüber Laugen aus.

Die monomeren Vorstufen dieser polymeren Amine sind teilweise bekannte, teilweise aber auch neue Verbindungen. Ihre Zusammensetzung kann beispielhaft durch Formeln wie

$(H_3C)N[CH_2CH_2CH_2Si(OC_2H_5)_3]_2$,

$(C_6H_5)N[CH_2CH_2CH_2Si(OC_2H_5)_3]_2$,

$(H_3C)N[CH_2Si(OC_2H_5)_3]_2$,

$N[CH_2CH_2CH_2Si(OC_2H_5)_3]_3$,

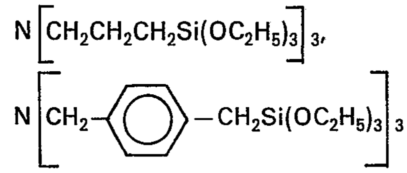

und dementsprechend die Zusammensetzung der daraus herstellbaren Polymereinheiten durch Formeln wie

$(H_3C)N[CH_2CH_2CH_2SiO_{3/2}]_2$,

$(C_6H_5)N[CH_2CH_2CH_2SiO_{3/2}]_2$,

$(H_3C)N[CH_2SiO_{3/2}]_2$,

$N[CH_2CH_2CH_2SiO_{3/2}]_3$,

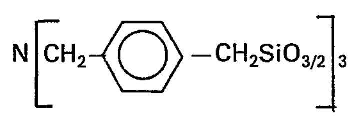

beschrieben werden.

Besondere Vorteile bezüglich der Verfügbarkeit der Ausgangsmaterialien und der stofflichen Eigenschaften des Polymers werden mit einem Amin erreicht, das aus Einheiten

$N(CH_2\text{-}CH_2\text{-}CH_2SiO_{3/2})_3$

besteht.

Gegenstand der Erfindung ist auch ein Verfahren zur Herstellung der polymeren tertiären Organosiloxanamine, das auch eine neue Darstellungsweise für einen grossen Teil der monomeren Vorstufen beinhaltet. In der US-Patentschrift 2 715 133 ist zwar ebenfalls eine ähnliche Reaktion beschrieben, die Produktbildung ist aber offensichtlich gegenüber dem erfindungsgemässen Verfahren verschieden, weil die Umsetzungszeiten deutlich kürzer gewählt wurden.

Das Verfahren ist dadurch gekennzeichnet, dass man 1 Mol eines primären Amins (dessen einer Substituent aus
einem Alkylrest mit 1 bis 10 C-Atomen,
einem Cycloalkylrest mit 5 bis 8 C-Atomen,
einem Benzylrest oder
einer jeweils mit einer Trialkoxisilylgruppe mit 1 bis 5 C-Atomen enthaltenden Alkoxiresten verbundenen Alkylengruppe mit 1 bis 10 C-Atomen oder Cycloalkylengruppe mit 5 bis 8 C-Atomen oder einer Gruppe

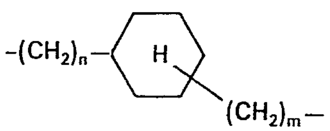

bzw. 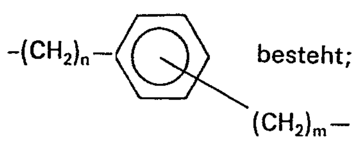 besteht;

$n = 1$ bis 6
$m = 0$ bis 6)
gegebenenfalls in einem Lösungsvermittler vorlegt, unter Rühren allmählich 1 Mol eines Halogenorganyltrialkoxisilans mit 1 bis 5 C-Atomen enthaltenden Alkoxigruppen zusetzt und das Reaktionsgemisch unter fortgesetztem Rühren innerhalb von 5 bis 48 Stunden bei einer Temperatur von Raumtemperatur bis zu 300°C umsetzt (Organylgruppierung des Silans
= Alkylengruppen mit 1 bis 10 C-Atomen,
Cycloalkylengruppen mit 5 bis 8 C-Atomen,
oder Reste der Formeln

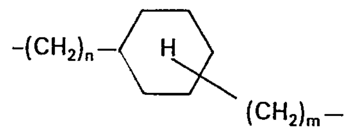

bzw. 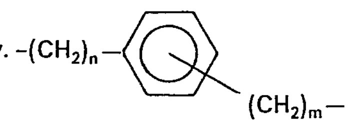

$n = 1$ bis 6
$m = 0$ bis 6),
die gebildeten Quartärsalze, gegebenenfalls in einem Lösungsvermittler, mit mindestens stöchiometrischen Mengen einer organischen oder anorganischen Base deprotoniert, das dabei gebildete anorganische Salz gegebenenfalls von der flüssigen Phase abtrennt, letztere destillativ in die gebildeten Aminkomponenten trennt und die überwiegend tertiäres Amin enthaltende Komponente, gegebenenfalls nach Zusatz eines Lösungsvermittlers und/oder eines Vernetzers der allgemeinen Formel

$Me(OR)_{2\text{-}4}R'_{0\text{-}2}$ bzw. $Me(OR)_{2\text{-}3}R'_{0\text{-}1}$,

(Me = Si, Ti oder Al;
R = Alkyl mit 1 bis 5 C-Atomen;
R′ = Methyl oder Ethyl), mit mindestens der für vollständige Hydrolyse und Kondensation erforderlichen Menge Wasser umsetzt und den dabei gebildeten Feststoff trocknet, gegebenenfalls tempert, mahlt und/oder klassifiziert.

Die dabei ablaufende Gesamtreaktion und ihre Stöchiometrie lässt sich durch nachstehende allgemeine Summengleichung [Gleichung (I)] gut beschreiben:

$$2\,J\text{-}R^{1'} + 2\,H_2N\text{-}R^{3'} \rightarrow (H\text{-}NR_2^{1'}\,R^{3'})^+J^- + (H_3NR^{3'})^+J^- \qquad (I)$$

wobei $R^{1'}$ für eine Vorstufe der Gruppen $R^1$ bzw. $R^2$ steht, an der die funktionellen Alkoxigruppen noch am Si-Atom vorhanden sind und $R^{3'}$ ebenfalls die funktionelle Vorstufe von $R^3$ darstellt oder aber auch dieselbe Bedeutung haben kann wie $R^3$, nämlich dann, wenn $R^3$ für eine 1 bis 10 C-Atome enthaltende lineare oder verzweigte Alkylengruppe, eine 5 bis 8 C-Atome enthaltende Cycloalkylengruppe oder die Benzylgruppe steht.

Nach Durchführung dieser 1. Stufe erfolgt in einem 2. Schritt, wobei die Produktmischung im ursprünglich verwendeten Reaktor belassen werden kann, die Deprotonierung der beiden Quartärsalze durch Umsetzung mit stöchiometrischen oder überschüssigen Mengen Base wie Alkali- bzw. Erdalkalihydroxid oder Ammoniak, bevorzugt jedoch Alkalimethylat, -ethylat, -n- und -i-propylat, -n- und -i-butylat und -n-pentylat, mit oder ohne Verwendung eines Lösungsvermittlers vorstehender Art, gemäss nachstehender allgemeiner Gleichung (II), in der die verwendete Base mit $B^-$ abgekürzt wird und ansonsten $R^{1'}$ und $R^{3'}$ den Bedeutungsumfang wie in Gleichung (I) haben.

$$(H\text{-}NR_2^{1'}\,R^{3'})^+J^- + (H_3NR^{3'})^+J^- + 2\,B^- \rightarrow NR_2^{1'}\,R^{3'} + H_2NR^{3'} + 2\,BH + 2\,J^- \qquad (II)$$

Ein bei der Umsetzung nach Gleichung (II) einsetzbarer Lösungsvermittler, der sinnvollerweise mit dem bei der Umsetzung nach Gleichung (I) verwendeten, sofern hier ein Einsatz überhaupt erfolgt, identisch ist, ist im Prinzip jede organische Flüssigkeit, die im Gemisch mit den öligen

Quartärsalzen die Base wenigstens teilweise zu lösen imstande ist; bevorzugt sind jedoch auch hier die zu den Si-ständigen Alkoxigruppierungen gen korrespondierenden Alkohole, wie Methanol, Ethanol, -n und i-Propanol, n- und i-Butanol und n-Pentanol.

Im Anschluss an diese 2. Prozessstufe erfolgt zunächst die Abtrennung des bei der Deprotonierung gebildeten anorganischen Salzes nach gängigen Techniken wie Filtrieren, Zentrifugieren und/oder Dekantieren, verbunden mit ein- oder mehrmaligem Auswaschen des abgetrennten Feststoffs mit einem Lösungsvermittler der genannten Art. Die mit der Waschlösung vereinigte Produktmischung wird anschliessend auf destillativem Wege in der Reihenfolge der Siedepunkte von anwesendem Lösungsvermittler und primärem Aminnebenprodukt $H_2NR^{3'}$, gegebenenfalls unter Verwendung von Vakuum, befreit. Während das primäre Amin, eventuell nach einer Reinigung, wieder in den Prozess nach Gleichung (I) zurückgeführt werden kann, wird das quantitativ gebildete tertiäre Amin durch Hydrolyse und Kondensation in das erfindungsgemässe polymere Amin der allgemeinen Formel (I) überführt. Hierzu wird es ohne oder unter Verwendung eines Lösungsvermittlers, bevorzugt unter Verwendung von 1 bis 1000 Gew.% des zu den jeweils an den Siliciumatomen sitzenden Alkoxigruppierungen korrespondierenden Alkohols, wie Methanol, Ethanol, n- und i-Propanol, n- und i-Butanol oder n-Pentanol, unter Rühren, bei Raumtemperatur oder erhöhter Temperatur bis zur Rückflusstemperatur des Lösungsvermittler/Amin-Gemisches (bei Normaldruck) mit einer, bezogen auf eine vollständige Hydrolyse und Kondensation, stöchiometrischen, bevorzugt jedoch überschüssigen Menge Wasser versetzt. Normalerweise erstarrt das Gemisch schon nach Zugabe eines Teils des Wassers zu einer puddingartigen Masse, die, gegebenenfalls nach Zusatz einer weiteren Menge Lösungsvermittler, durch kräftiges Rühren unter Rückflusstemperatur in eine feindisperse Suspension überführt wird. Sollte keine spontane Polykondensation erfolgen, erweist es sich in manchen Fällen als vorteilhaft, der noch homogenen Lösung einen Kondensationskatalysator, z.B. in Gestalt katalytischer Mengen Säure oder eine geringe Menge an bereits vorhandenem polymeren Produkt zuzusetzen. Aus der gebildeten Suspension kann der Feststoff nach gängigen Techniken, entweder durch Filtrieren, Zentrifugieren und/oder Dekantieren abgetrennt werden oder die flüchtigen Bestandteile der Produktsuspension können auch vom Feststoff abdestilliert werden, wobei gegebenenfalls auch Vakuum verwendet werden kann.

Das isolierte Produkt wird anschliessend bei Temperaturen von Raumtemperatur bis 250°C, eventuell unter Verwendung von Vakuum, getrocknet. Nachdem alle anhaftenden Reste des Wasser/Lösungsvermittler-Gemisches und des abgespaltenen Alkohols entfernt worden sind, kann sich der Trocknung eine sogenannte Temperung des Produkts bei ca. 200–350°C anschliessen, die gegebenenfalls wiederum unter Einsatz von Vakuum durchgeführt werden kann. Das trockene Produkt wird entweder direkt verwendet oder es wird zwecks Erhöhung der Teilchenfeinheit und der Oberfläche noch gemahlen und klassifiziert. Die Produktmahlung kann aber auch bereits in der Fällungssuspension durchgeführt werden.

Im Falle des Einbaus sogenannter Vernetzer durch Cofällung der monomeren Base mit z.B. Silicium- oder Titantetraalkoholaten bzw. -tetrahalogeniden oder Aluminiumtrialkoholaten bzw. -trihalogeniden ist es zweckmässig, Base und Vernetzer erst kurz vor Hydrolyse und Kondensation zu vereinigen, da sonst eine Störung des Darstellungsprozesses nach Gleichung (I) und (II) eintreten kann. Bei Verwendung der Tetrahalogenide des Siliciums und Titans bzw. der Trihalogenide des Aluminiums muss im Anschluss an die Heterogenisierung eine Deprotonierung der gebildeten Ammoniumsalze durch Umsetzung mit Alkali- oder Erdalkalihydroxid, Natriumhydrogencarbonat, Ammoniak, primären, sekundären oder tertiären Aminen und anschliessendes gutes Auswaschen bzw. Extrahieren des abgetrennten Feststoffes mit Wasser durchgeführt werden.

Charakterisieren lassen sich die neuen anorganischen Polymersysteme insbesondere anhand der Hydrolyseausbeute, der Elementaranalysen und durch Bestimmung ihrer Basizität. Je nach Vorbehandlung besitzen die polymeren Basen spez. Oberflächen von 0,1 bis 3000 $m^2/g$ und Teilchengrössendurchmesser von ca. 1 cm bis 1 µm. An der Luft sind sie bis wenigstens 200°C, teilweise sogar bis über 275°C stabil. Unter Schutzgasatmosphäre ist eine thermische Stabilität von über 400°C gegeben.

Neben der für die Gewinnung der tertiären polymeren Organosiloxanamine vorstehend beschriebenen und erläuterten Herstellungsweise sind noch weitere Verfahrensvarianten möglich, welche ebenfalls Gegenstand der Erfindung sind, aber anstelle von primären Aminen von sekundären Aminen ausgehen.

Eine dieser Verfahrensvarianten besteht darin, dass man 1 Mol eines sekundären Bis(trialkoxisilylorganyl)amins (Organylgruppe = $R^4$; Alkoxigruppen mit 1 bis 5 C-Atomen) mit 1 Mol eines Halogenorganyltrialkoxisilans, in welchem Organylgruppe und Alkoxigruppen dieselbe Bedeutung wie bei dem Amin-Reaktionspartner haben, oder eines linearen oder verzweigten Alkylhalogenids mit 1 bis 10 C-Atomen, eines Cycloalkylhalogenids mit 5 bis 8 C-Atomen oder Benzylhalogenid, umsetzt, das gebildete Quartärsalz, gegebenenfalls in einem Lösungsvermittler, mit mindestens stöchiometrischen Mengen einer organischen oder anorganischen Base deprotoniert, das dabei gebildete anorganische Salz gegebenenfalls von der flüssigen Phase abtrennt und das tertiäre Amin entsprechend Anspruch 5, nämlich der beschriebenen, von primären Aminen ausgehenden Verfahrensweise, weiterverarbeitet.

Es wird also auch hier die überwiegend tertiäres Amin enthaltende Komponente, gegebenenfalls nach Zusatz eines Lösungsvermittlers und/oder eines Vernetzers vollständig hydrolysiert und kondensiert und der Feststoff dann getrocknet und gegebenenfalls getempert, gemahlen und/oder klassifiziert.

Von einem sekundären Amin geht auch eine weitere Verfahrensvariante aus. Sie sieht vor, dass man 1 Mol eines sekundären Amins (in dessen einem Trialkoxisilylorganylsubstituenten die Organylgruppe die Bedeutung $R^4$ hat und die Alkoxigruppen 1 bis 5 C-Atome aufweisen, während der andere Substituent aus einer linearen oder verzweigten Alkylgruppe mit 1 bis 10 C-Atomen oder einer Cycloalkylgruppe mit 5 bis 8 C-Atomen oder einer Benzylgruppe besteht) mit 1 Mol eines Halogenorganyltrialkoxisilans (in dessen Organylgruppe und Alkoxigruppen dieselbe Bedeutung wie bei dem Trialkoxisilylorganylsubstituenten des Amin-Reaktionspartners haben) umsetzt, das gebildete Quartärsalz, gegebenenfalls in einem Lösungsvermittler, mit mindestens stöchiometrischen Mengen einer organischen oder anorganischen Base deprotoniert, das dabei gebildete anorganische Salz gegebenenfalls von der flüssigen Phase abtrennt und das tertiäre Amin entsprechend der Anweisung der vorstehend geschilderten Prozessvarianten weiterverarbeitet (vgl. Anspruch 5).

Bei allen bisher offenbarten Prozessvarianten können in gleicher Weise vorteilhafte Einzelmassnahmen angewendet werden. Solche erstrecken sich auf die Auswahl des Halogens in den eingesetzten Halogenorganylverbindungen, auf den Bau des Alkyl- und/oder Trialkoxisilylalkylrestes am Aminstickstoff bzw. des Alkylrestes im Halogenalkyltrialkoxisilan, des weiteren auf die Reaktionsbedinungen für die Umsetzung zwischen Amin und Halogenverbindung, die Auswahl besonders geeigneter Deprotonierungsmittel und geeigneter Solventien für die Deprotonierung und schliesslich auf Bedingungen für Hydrolyse und Polykondensation sowie für die Aufarbeitung des Polykondensats.

So wurde gefunden, dass zur Umsetzung primärer wie sekundärer Amine Jod-, Brom- oder Chlororganyltrialkoxisilane verwendet werden können.

Weiter wurde gefunden, dass sich keinerlei Änderungen im Ablauf der einzelnen Reaktionsstufen zeigen, wenn der Alkyl- und/oder Trialkoxisilylalkylrest am Aminstickstoff bzw. der Alkylrest im Halogenalkyltrialkoxisilan linear oder verzweigt ist. Demgemäss können Amine bzw. Halogenalkyltrialkoxisilane verwendet werden, in denen der Alkyl- und/oder Trialkoxisilylalkylrest am Aminstickstoff bzw. der Alkylrest im Halogenalkyltrialkoxisilan linear oder verzweigt ist.

Bevorzugt nimmt man die Umsetzung des Amins mit dem Halogenorganyltrialkoxisilan bei 50–180°C vor.

Die Umsetzung lässt sich auch bei einem erhöhten Druck, welcher der Summe der Partialdrucke der Komponenten der Reaktionsmischung bei der angewandten Reaktionstemperatur entspricht, vornehmen.

Es wurde auch festgestellt, dass man zur Deprotonierung Natrium- oder Kaliummethylat, -ethylat, -propylat, -butylat oder -pentylat, Alkali- oder Erdalkalimetallhydroxid, Alkalimetallhydrogencarbonat, Alkalimetallcarbonat oder Ammoniak verwenden kann.

Des weiteren wird die Verfahrensführung sehr vereinfacht, wenn man die Deprotonierung in einem Alkohol, der zu den an den Siliciumatomen eines oder beider Reaktionspartner gebundenen Alkoxiresten korrespondiert, vornimmt.

Es konnte auch ermittelt werden, dass man die Hydrolyse und Kondensation bei Raumtemperatur bis Rückflusstemperatur des Reaktionsgemisches durchführen kann, so dass bis zu dieser Obergrenze Gebrauch von der Erhöhung der Reaktionsgeschwindigkeit durch Temperatursteigerung gemacht werden kann.

Das Polykondensat kann man, gegebenenfalls im Vakuum, bei Raumtemperatur bis 250°C trocknen.

Für die Gebrauchsfähigkeit der Verfahrensprodukte kann schliesslich, je nach Verwendung, eine Temperbehandlung Vorteile bringen.

Nach einer günstigen Ausbildungsform dieser Nachbehandlungsstufe tempert man, gegebenenfalls im Vakuum, mindestens eine Stunde bis zu vier Tagen bei 200–350°C.

Schliesslich wurde gefunden, dass sich die sekundären polymeren Amine auf recht einfache Weise aus Monomeren herstellen lassen, welche nach an sich bekannten Verfahren erhältlich sind. Eine entsprechende Ausbildung der Erfindung sieht eine von den bisher behandelten Verfahrensvarianten abweichende Verfahrensführung vor, welche darin besteht, dass man Bis(trialkoxisilylorganyl)amin (in dem die Organylgruppe die Bedeutung $R^4$ hat und die Alkoxigruppen 1 bis 5 C-Atome aufweisen), gegebenenfalls nach Zusatz eines Lösungsvermittlers, mit mindestens der für vollständige Hydrolyse und Kondensation erforderlichen Menge Wasser umsetzt und den dabei gebildeten Feststoff entsprechend Anspruch 5 weiterverarbeitet.

Auch dabei kann man Amine verwenden, in denen die Trialkoxisilylreste am Aminstickstoff linear oder verzweigt sind.

Die Hydrolyse und Kondensation kann man bei Raumtemperatur bis Rückflusstemperatur des Reaktionsgemisches durchführen.

Das Polykondensat kann man, gegebenenfalls im Vakuum, bei Raumtemperatur bis 250°C trocknen.

Schliesslich kann man das Polykondensat, gegebenenfalls im Vakuum, mindestens eine Stunde bis zu vier Tagen bei 200–350°C tempern.

Eine besonders wertvolle Verfahrensführung zur Herstellung der tertiären polymeren Organosiloxanamine, welche als stickstoffhaltiges Ausgangsmaterial den sehr kostengünstigen Ammoniak vorsieht, konnte schliesslich noch für die Herstellung der tertiären polymeren Amine realisiert werden. Das Verfahren sieht vor, dass man

Ammoniak mit Halogenorganyltrialkoxisilan (in dem die Organylgruppe die Bedeutung $R^4$ hat und die Alkoxigruppen 1 bis 5 C-Atome aufweisen), gegebenenfalls in Gegenwart eines Lösungsvermittlers bei erhöhten Temperaturen bis maximal 250°C und einem Druck, welcher der Summe der Partialdrucke der Komponenten der Reaktionsmischung bei der angewandten Reaktionstemperatur entspricht, umsetzt, wobei man auf 1 Mol Halogenorganylsilan 1–20 Mole Ammoniak einsetzt, überschüssigen Ammoniak zunächst weitgehend entfernt, das gebildete anorganische Salz abtrennt, Ammoniakreste sowie entstandene kleinere Mengen an primären und sekundären Aminen sowie gegebenenfalls eingesetzten Lösungsvermittler destillativ entfernt und das verbleibende tertiäre Amin, entsprechend Ansprüchen 5 sowie 14–16 weiterverarbeitet.

Bevorzugt führt man die Umsetzung bei ca. 150°C durch.

Auch bei diesem Verfahren gilt, dass man als Silan Jod-, Brom- oder Chlororganyltrialkoxisilan verwenden kann und dass man Halogenalkyltrialkoxisilane verwenden kann, in denen der Alkylrest linear oder verzweigt ist.

Die Anwendbarkeit der neuen polymeren tertiären und sekundären Amine mit dem kieselsäureartigen Grundgerüst erstreckt sich grundsätzlich auf dieselben Anwendungsgebiete wie sie eingangs für weitgehend unlösliche Aminbasen auf Basis organischer Polymerer beispielhaft genannt sind, ist jedoch auf diese nicht beschränkt. Eine charakteristische Verwendung der durch schwach basischen Charakter gekennzeichneten polymeren tertiären und sekundären Amine, die auch Gegenstand der Erfindung ist, besteht in der Entfernung von Säuren auf Flüssigkeiten und Gasen.

Die Erfindung wird nachfolgend anhand von Ausführungsbeispielen weiter erläutert

Beispiel 1

Eine Lösung von 218,73 g (7,04 Mol) $CH_3NH_2$ in 1700 ml Ethanol wurde bei angenähert Raumtemperatur binnen 1 Stunde mit 2093,20 g (6,3 Mol) $J\text{-}CH_2CH_2CH_2Si(OC_2H_5)_3$ versetzt und anschliessend 20 Stunden unter Rückfluss erhitzt. Danach wurde auf 50°C abgekühlt, eine Lösung von 574,89 g (8,45 Mol) $NaOC_2H_5$ in 3 l Ethanol binnen 1 Stunde zugesetzt und nochmals 2 Stunden unter Rückfluss gerührt. Nach destillativer Entfernung des vorhandenen Alkohols und überschüssigen Methylamins am Rotationsverdampfer wurden 1,5 l Diethylether zugesetzt, die schwerlöslichen Salze am Druckfilter abfiltriert, mit 250 ml Diethylether gewaschen und der Diethylether wiederum auf destillativem Wege entfernt. Die verbleibende Flüssigkeit wurde zunächst von einer geringen Menge zweiter Phase, die sich in Form eines viskosen Öls am Boden des Gefässes befand, abgetrennt und anschliessend fraktioniert destilliert. Das gewünschte Produkt

$H_3CN[CH_2CH_2CH_2Si(OC_2H_5)_3]_2$

ging bei einem Druck von 0,8 mbar bei einer Temperatur von 150–152°C über. Die Ausbeute, berechnet nach Gl. (I) und (II) in der Beschreibung, betrug mit 983,48 g 71% der Theorie. Das Produkt wurde in 1 l Ethanol gelöst und bei 50–55°C unter leichtem Rühren innerhalb von 15 min. mit 1 l entsalztem Wasser versetzt. Die Mischung wurde dann auf Rückflusstemperatur aufgeheizt, wobei der Inhalt schlagartig zu einer puddingartigen Masse erstarrte, die im Verlauf des weiteren 3stündigen Rührens zu einer feinen Suspension dispergiert wurde.

Anschliessend erfolgten Abfiltration des Feststoffs, mehrmaliges Auswaschen mit insges. 5 l Wasser, 12stündige Trocknung des Produkts bei 150°C/100 mbar und Vermahlung in einer Stiftmühle.

Bei vollständiger Hydrolyse und Kondensation des eingesetzten Monomerprodukts waren 486,15 g polymeres Produkt zu erwarten; erhalten werden konnten 485,2 g, das entspricht 99,8% der Theorie. Die gefundenen Analysendaten bestätigten ebenfalls die Zusammensetzung der Polymereinheiten der Formel

$H_3CN[CH_2CH_2CH_2SiO_{3/2}]_2$.

| | % C | % H | % N |
|---|---|---|---|
| Theorie: | 38,68 | 6,96 | 6,44 |
| Gefunden: | 37,93 | 6,96 | 6,97 |

Eine differentialkalorimetrische (DSC) Untersuchung zeigte den Beginn einer exothermen Zersetzung bei 222°C an Luft und den Beginn einer endothermen Zersetzung bei 390°C unter Stickstoffatmosphäre an. Die spezifische Oberfläche des Produkts betrug 1,8 m²/g, bestimmt am Areameter.

Beispiel 2

300 g (2,32 Mol) Octylamin wurden binnen 2 Stunden unter Rühren bei 50°C mit 493,58 g (2,32 Mol) Chlormethyltriethoxisilan versetzt. Das Gemisch wurde anschliessend 30 Stunden bei 180°C gerührt, dann auf Raumtemperatur abgekühlt und mit 157,88 g (2,32 Mol) $NaOC_2H_5$, gelöst in 1 l Ethanol, binnen 30 min. versetzt. Es wurde weitere 2 Stunden bei Rückflusstemperatur gerührt, dann der anwesende Alkohol abdestilliert, der Feststoff abfiltriert, mit n-Hexan nachgewaschen und das n-Hexan wiederum auf destillativem Wege entfernt.

Mit der verbleibenden Flüssigkeit wurde ein Dünnschichtverdampfer beschickt, an dem bei einer Heizmanteltemperatur von 120°C und einem Vakuum von 0,8 mbar das bei der Deprotonierung frei gewordene Octylamin und geringe Mengen anderer leichterflüchtiger Verunreinigungen über Kopf entfernt wurden. Das erhaltene Sumpfprodukt wurde direkt mit 0,6 l Toluol gemischt, auf 60°C erwärmt und unter Rühren mit 500 ml Wasser binnen 20 min. versetzt. Es wurde noch 1 Stunde bei derselben Temperatur gerührt, in deren Verlauf sich ein gelblich-weisser Niederschlag bildete. Dieser wurde anschliessend noch 4 Stunden bei Rückflusstemperatur gerührt, dann abfiltriert, zunächst mit Ethanol, dann mit viel Wasser gewaschen und anschliessend bei 120°C/100 mbar 24 Stunden lang getrocknet. Es konnten 306,99 g (102,0 % der Theorie) polymeres Produkt, aufgebaut aus Einheiten der Formel $C_8H_{17}N[CH_2SiO_{3/2}]_2$, erhalten werden.

| Analysendaten: | % C | % H | % N |
|---|---|---|---|
| Theorie: | 46,29 | 8,16 | 5,40 |
| Gefunden: | 45,43 | 8,21 | 5,82 |

Beispiel 3

Aus 260,0 g (2,62 Mol) Cyclohexylamin und 857,6 g (2,62 Mol) Brompropyltriisopropoxisilan wurden analog zu Beispiel 2 391,2 g (104,6% d. Th.) eines polymeren Amins, im wesentlichen bestehend aus Polymereinheiten der Formel $C_6H_{11}N[CH_2CH_2CH_2SiO_{3/2}]_2$, die auch durch folgende Gegenüberstellung verschiedener theoretischer und gefundener Analysendaten belegt werden kann, erhalten

| | % C | % H | % N |
|---|---|---|---|
| Theorie: | 50,59 | 8,12 | 4,91 |
| Gefunden: | 49,98 | 8,23 | 5,37 |

Beispiel 4

Aus 180 g (1,68 Mol) Benzylamin und 485,3 g (1,68 Mol)

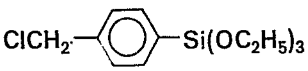

wurden analog zu Beispiel 2 318,1 g (97,2% d. Th.) eines polymeren Amins bestehend aus Einheiten der Formel

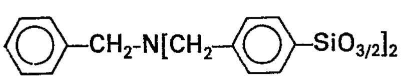 erhalten.

Die Analysendaten lauten wie folgt:

| | % C | % H | % N | % Si |
|---|---|---|---|---|
| Theorie: | 64,75 | 4,92 | 3,60 | 14,42 |
| Gefunden: | 65,73 | 5,62 | 3,99 | 13,71 |

Das Produkt besass nach Mahlung und 3tägiger Temperung bei 250°C/1 mbar eine spezifische Oberfläche von 423 m²/g, bestimmt am Areameter.

Beispiel 5

Zu 1344,6 g (7,5 Mol) $H_2N\text{-}CH_2CH_2CH_2Si(OCH_3)_3$ wurden binnen 2 Stunden bei Raumtemperatur 1490,4 g (7,5 Mol) $Cl\text{-}CH_2CH_2CH_2Si(OCH_3)_3$ zugetropft. Die Mischung wurde anschliessend auf 150°C aufgeheizt, 15 Stunden bei dieser Temperatur gerührt, dann auf Raumtemperatur abgekühlt, erst mit 1 l getrocknetem Methanol und dann chargenweise mit 405,2 g (7,5 Mol) $NaOCH_3$ versetzt, wobei die Temperatur bis auf 60°C anstieg. Nach weiteren 3 Stunden Rühren unter Rückfluss erfolgte die Abfiltration des gebildeten Natriumchlorids. Dieses wurde mit insgesamt 1 l Methanol ausgewaschen. Nach Vereinigung der Waschlösung mit der Produktmischung wurde das Methanol auf destillativem Wege bei 60–80°C Sumpftemperatur und 50 mbar Druck entfernt und mit der verbleibenden Flüssigkeit ein Sambay-Verdampfer beschickt. Bei einer Heizmanteltemperatur von 130°C und einem Vakuum von 0,4 mbar konnten als Kopfprodukt 611,8 g (91,0 % d. Th.) $H_2N\text{-}CH_2CH_2CH_2Si(OCH_3)_3$ zurückgewonnen werden.

Der im wesentlichen aus der tertiären Base $N[CH_2CH_2CH_2Si(OCH_3)_3]_3$ bestehende Sumpf wurde mit 2 l Methanol versetzt und unter Rühren auf 50°C aufgeheizt. Dann wurden hierzu im Verlauf von 30 min. 3 l Wasser zugesetzt. Bereits nach Zugabe eines Teils des Wassers setzte die spontane Polykondensation des Amins ein. Unter langsamem Rühren wurde auf Rückflusstemperatur aufgeheizt, 2 Stunden refluxiert und die Suspension anschliessend mit einem Ultra-Turrax-Dispergator 10 min. behandelt. Nach Abtrennung des feinen Feststoffs von der flüssigen Phase durch Zentrifugieren wurde dieser zunächst 12 Stunden bei 180°C getrocknet und anschliessend 12 Stunden bei 250°C/100 mbar getempert. Es konnten 1160,0 g (104,3 % d. Th.) an polymerem Amin, bestehend aus Struktureinheiten der Formel $N[CH_2CH_2CH_2SiO_{3/2}]_3$ erhalten werden.

| Analysendaten: | % C | % H | % N | % Si |
|---|---|---|---|---|
| Theorie: | 36,46 | 6,12 | 4,72 | 28,42 |
| Gefunden: | 35,61 | 5,99 | 5,12 | 27,29 |

Das Produkt besass gemäss der Oberflächenbestimmung am Areameter eine spezifische Oberfläche von 315 m²/g. Eine DSC-Untersuchung ergab eine beginnende Zersetzung ab 290°C an Luft und ab 408°C unter Stickstoffatmosphäre.

Beispiel 6

Aus 195,0 g (0,70 Mol) $H_2N\text{-}CH_2Si(OC_4H_9)_3$ und 252,2 g (0,70 Mol) $J\text{-}(CH_2)_8Si(OCH_3)_3$ wurden analog zu Beispiel 5 138,6 g (96,9% d. Th.) eines polymeren Amins, bestehend aus Einheiten der Formel $N(CH_2SiO_{3/2})\,[(CH_2)_8SiO_{3/2}]_2$ erhalten.

| Analysendaten: | % C | % H | % N | % Si |
|---|---|---|---|---|
| Theorie: | 49,96 | 8,39 | 3,43 | 20,62 |
| Gefunden: | 48,99 | 8,22 | 3,76 | 21,20 |

Beispiel 7

$CH_3$ (an CH)

Aus 240,6 g (1,02 Mol) $H_2N\text{-}CH_2CHCH_2Si(OC_2H_5)_3$

$CH_3$ (an CH)

und 259,9 g (1,02 Mol) $Cl\text{-}CH_2CHCH_2Si(OC_2H_5)_3$

konnten analog zu Beispiel 5 176,3 g (102,1% d.Th.) eines polymeren Amins, bestehend aus Einheiten der Formel

$$N\left[\begin{matrix}CH_3\\|\\CH_2CHCH_2SiO_{3/2}\end{matrix}\right]_3$$ erhalten werden.

| Analysendaten: | % C | % H | % N | % Si |
|---|---|---|---|---|
| Theorie: | 42,57 | 7,15 | 4,14 | 24,89 |
| Gefunden: | 41,73 | 7,46 | 4,81 | 24,90 |

Beispiel 8

1344,6 g (7,5 Mol) $H_2N-CH_2CH_2CH_2Si(OCH_3)_3$ und 1490,4 g (7,5 Mol) $Cl-CH_2CH_2CH_2Si(OCH_3)_3$ wurden analog zu Beispiel 5 umgesetzt. Die zunächst erhaltene tertiäre Base

$N[CH_2CH_2CH_2Si(OCH_3)_3]_3$

wurde allerdings vor der Hydrolyse mit einer äquimolaren Menge (3,75 Mol) $Si(OCH_3)_4$ versetzt. Nachdem ansonsten weiter wie nach Beispiel 5 verfahren wurde, konnten 1339,9 g (100,2 % d.Th.) eines vernetzten polymeren Amins, bestehend aus Struktureinheiten der Formel $N[CH_2CH_2CH_2SiO_{3/2}]_3 \cdot SiO_2$ erhalten werden.

| Analysendaten: | % C | % H | % N | % Si |
|---|---|---|---|---|
| Theorie: | 30,31 | 5,09 | 3,93 | 31,51 |
| Gefunden: | 28,97 | 5,35 | 4,38 | 30,62 |

Gemäss einer DSC-Untersuchung zersetzte sich das polymere Produkt an der Luft exotherm ab einer Temperatur von 275°C und unter Stickstoffatmosphäre endotherm ab einer Temperatur von 429°C. Die Oberflächenbestimmung ergab eine spezifische Oberfläche von 215 $m^2/g$.

Beispiel 9

Aus 1075,7 g (6,0 Mol) $H_2N-CH_2CH_2CH_2Si(OCH_3)_3$, 1192,3 g (6,0 Mol) $Cl-CH_2CH_2CH_2Si(OCH_3)_3$ und 444,8 g (3,0 Mol) $(C_2H_5)_2Si(OCH_3)_2$ wurden analog zu Beispiel 8 1137,5 g (95,1 % d.Th.) polymeres Produkt, bestehend aus Polymereinheiten der Formel

$N[CH_2CH_2CH_2SiO_{3/2}]_3 \cdot (C_2H_{521)2}SiO$, erhalten.

| Analysendaten: | % C | % H | % N | % Si |
|---|---|---|---|---|
| Theorie: | 39,16 | 7,08 | 3,51 | 28,18 |
| Gefunden: | 39,01 | 7,38 | 3,90 | 27,29 |

Beispiel 10

310,3 g (1,07 Mol) $J-CH_2CH_2CH_2Si(OCH_3)_3$ wurden in 100 ml getrocknetem Methanol gelöst. Zu dieser auf Rückflusstemperatur erhitzten Lösung wurden unter Rühren 365,5 g (1,07 Mol) $HN[CH_2CH_2CH_2Si(OCH_3)_3]_2$ binnen 2,5 Stunden zugetropft. Nach beendeter Zugabe wurde noch eine weitere Stunde unter Rückfluss gerührt. Die auf Raumtemperatur abgekühlte Lösung wurde dann portionsweise mit 63,7 g (1,18 Mol) $NaOCH_3$ versetzt, noch 2 weitere Stunden unter Rückfluss gerührt und bei Raumtemperatur von gebildetem NaJ abzentrifugiert. Das Zentrifugat wurde direkt unter langsamem Rühren bei Raumtemperatur tropfenweise mit 500 ml Wasser versetzt. Im Verlauf der Zugabe erstarrte der Kolbeninhalt zu einer gelartigen Masse, die im Verlauf des weiteren 2,5stündigen Rührens unter Rückfluss in eine feindisperse Suspension umgewandelt wurde. Nach Abfiltration und 12stündiger Trocknung bei 150°C/100 mbar wurden 314,7 g (99,2 % d.Th.) des polymeren Produkts, bestehend aus Polymereinheiten der Formel $N[CH_2CH_2CH_2SiO_{3/2}]_3$ erhalten.

| Analysendaten: | % C | % H | % N | % Si |
|---|---|---|---|---|
| Theorie: | 36,46 | 6,12 | 4,72 | 28,42 |
| Gefunden: | 35,10 | 6,07 | 4,89 | 27,17 |

Beispiel 11

250,0 (0,86 Mol) $J-CH_2CH_2CH_2Si(OCH_3)_3$ und 294,3 g (0,86 Mol) $HN[CH_2CH_2CH_2Si(OCH_3)_3]_2$ wurden analog zu Beispiel 10 umgesetzt. Vor der Zugabe des Wassers wurden der Produktlösung 139,5 g (0,86 Mol) $Al(OC_2H_5)_3$ zugesetzt. Nach weiterer Behandlung wie in Beispiel 10 wurde ein polymeres Produkt, bestehend aus Einheiten der angenäherten Formel

$N[CH_2CH_2CH_2SiO_{3/2}]_3 \cdot AlO_{3/2}$ erhalten.

Ausbeute: 304,2 g (101,8 % d.Th.).

| Analysendaten: | % C | % H | % N | % Si | % Al |
|---|---|---|---|---|---|
| Theorie: | 31,11 | 5,22 | 4,03 | 24,25 | 7,76 |
| Gefunden: | 30,22 | 5,07 | 4,46 | 23,86 | 6,79 |

Beispiel 12

Zu 81,1 g (0,42 Mol) auf 100°C erhitztes 2-Bromoctan wurden unter kräftigem Rühren binnen 2 Stunden 190,6 g

$$(0{,}42\ Mol)\ NH\left[\begin{matrix}CH_3\\|\\CH_2-CH-CH_2Si(OC_2H_5)_3\end{matrix}\right]_2$$

zugesetzt.

Anschliessend wurde noch 3 weitere Stunden bei dieser Temperatur gerührt, dann auf Raumtemperatur abgekühlt und binnen 1 Stunde eine Lösung von 23,6 g (0,42 Mol) KOH in 200 ml Methanol zugesetzt. Nachdem noch eine weitere Stunde bei 60°C gerührt wurde, wurden bei dieser Temperatur binnen 15 min. 200 ml Wasser zugesetzt. Es wurde noch 1 Stunde bei 60°C und anschliessend 3 Stunden unter Rückfluss gerührt. Der gebildete Niederschlag wurde abfiltriert, zunächst mit Methanol, dann mit Wasser gewaschen und anschliessend bei 120°C/100 mbar 24 Stunden getrocknet. Nach Mahlung in einer Stiftmühle konnten 138,7 g (96,1 % d.Th.) eines polymeren Amins, bestehend aus Einheiten der Formel

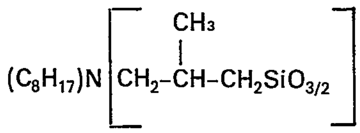 erhalten werden.

| Analysendaten: | % C | % H | % N | % Si |
|---|---|---|---|---|
| Theorie: | 55,93 | 9,68 | 4,08 | 16,35 |
| Gefunden: | 54,86 | 9,18 | 4,36 | 15,87 |

Beispiel 13

Aus 124,4 g (0,36 Mol)

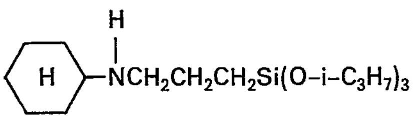

und 117,8 g (0,36 Mol) vorgelegtes
$Br-CH_2CH_2CH_2Si(O-i-C_3H_7)_3$
wurden analog zu Beispiel 12 101,6 g (98,9% d.Th.) polymeres Amin mit Einheiten der Formel

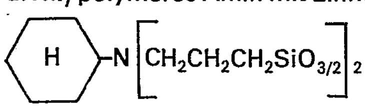 erhalten.

| Analysendaten: | % C | % H | % N | % Si |
|---|---|---|---|---|
| Theorie: | 50,49 | 8,12 | 4,91 | 19,68 |
| Gefunden: | 49,37 | 7,90 | 5,23 | 18,76 |

Beispiel 14

160,2 g (0,68 Mol)
$(H_3C)NH-CH_2CH_2CH_2Si(OC_2H_5)_3$
und 194,0 g (0,68 Mol) vorgelegtes
$Br-CH_2CH_2CH_2Si(OC_2H_5)_3$
wurden zunächst gemäss Beispiel 12 umgesetzt. Anschliessend erfolgte die Deprotonierung durch Zusatz von 65,4 g (0,68 Mol) $Na-n-OC_4H_9$, gelöst in 400 ml $n-C_4H_9OH$, binnen 30 min. Es wurde nach 2 Stunden bei 100°C gerührt, dann wurden zu der auf 50°C abgekühlten Lösung zunächst 44,2 g (0,17 Mol) $Ti(OC_2H_5)_4$ und dann 200 ml Wasser zugesetzt. Es wurde noch 3 Stunden bei 100°C gerührt, dann wurde das gebildete Polymer, bestehend aus Einheiten der Formel
$(H_3C)N[CH_2CH_2CH_2SiO_{3/2}]_2 \cdot 0,25\,TiO_2$
analog zu Beispiel 12 weiterbehandelt. Ausbeute: 156,7 g (97,1 % d.Th.).

| Analysendaten: | % C | % H | % N | % Si | % Ti |
|---|---|---|---|---|---|
| Theorie: | 35,42 | 6,37 | 5,90 | 23,67 | 5,05 |
| Gefunden: | 34,47 | 6,42 | 6,01 | 22,80 | 4,87 |

Beispiel 15

200,0 g (0,44 Mol)

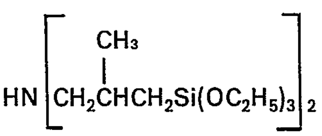

wurden in 200 ml $C_2H_5OH$ gelöst. Zu dieser auf 50° C erwärmten Lösung wurden binnen 30 min. 200 ml entsalztes Wasser zugetropft. Die Suspension des sich schlagartig bildenden Feststoffs wurde noch 25 Stunden unter Rückfluss gerührt und dann weiter wie in Beispiel 5 verfahren. Es konnten 105,0 g (103,1 % d.Th.) polymeres Produkt mit Einheiten der Formel

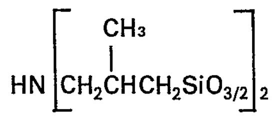 erhalten werden.

| Analysendaten: | % C | % H | % N | % Si |
|---|---|---|---|---|
| Theorie: | 41,52 | 7,41 | 6,05 | 24,27 |
| Gefunden: | 40,37 | 7,28 | 5,95 | 26,41 |

Beispiel 16

2408 g (10,0 Mol) $Cl-CH_2CH_2CH_2Si(OC_2H_5)_3$ und 567,2 g (33,3 Mol) flüssiger $NH_3$ wurden in einem 5 l Hubautoklaven vereinigt. Das Gemisch wurde auf 150°C aufgeheizt, wobei sich ein Anfangsdruck von ca. 65 bar einstellte. Nach 24stündigem Rühren stellte sich ein Enddruck von ca. 50 bar ein. Der Autoklav wurde abgekühlt und bei Raumtemperatur entspannt, wobei sich ein grosser Teil des überschüssigen $NH_3$ verflüchtigte. Das gebildete Ammonchlorid wurde abfiltriert und mit insges. 500 ml Methylenchlorid ausgewaschen. Nach Vereinigung von Waschflüssigkeit und Filtrat wurde zunächst das Methylenchlorid am Rotationsverdampfer entfernt. Mit dem verbleibenden Sumpf wurde ein Dünnschichtverdampfer beschickt, an dem bei einer Manteltemperatur von 150°C und einem Druck von 0,6 mbar leichtflüchtige Bestandteile, darunter auch $H_2N-CH_2CH_2CH_2Si(OC_2H_5)_3$, entfernt wurden. Als schwerflüchtige Fraktion verblieben 1526 g $N[CH_2CH_2CH_2Si(OC_2H_5)_3]_3$, was einem 72,7%igen Umsatz des eingesetzten
$ClCH_2CH_2CH_2Si(OC_2H_5)_3$
zum gewünschten Produkt entspricht. Dieses wurde anschliessend mit 1500 ml Ethanol versetzt und auf 70°C aufgeheizt. Unter langsamem Rühren wurde dann 1 l Wasser binnen 1 Stunde zugesetzt. Es wurde noch 1 Stunde bei dieser Temperatur und dann 3 Stunden unter Rückfluss gerührt. Der gebildete Feststoff wurde abfiltriert, mit 1 l Wasser gewaschen, 24 Stunden bei 150°C/100 mbar getrocknet und 12 Stunden bei 260°C getempert, anschliessend gemahlen und in verschiedene Korngrössen klassifiziert. Es konnten insgesamt 705,9 g (98,3% d.Th., bezogen auf monomeres Produkt) polymere Base, bestehend aus Einheiten der Formel $N[CH_2CH_2CH_2SiO_{3/2}]_3$ erhalten werden.

| Analysendaten: | % C | % H | % N | % Si |
|---|---|---|---|---|
| Theorie: | 36,46 | 6,12 | 4,72 | 28,42 |
| Gefunden: | 34,89 | 5,95 | 4,78 | 27,26 |

Beispiel 17

10 g des nach Beispiel 16 hergestellten polymeren Amins mit Einheiten der Formel $N[CH_2CH_2CH_2SiO_{3/2}]_3$ wurden in einem Becherglas in 100 ml 1n HCl-Lösung 2 Stunden lang gerührt. Anschliessend wurde der Feststoff abfiltriert, mit $H_2O$ ausgewaschen und das mit der Waschlösung vereinigte Filtrat mit 1n NaOH-Lösung bis zum Neutralpunkt titriert. Dabei stellte sich heraus, dass 33 % der ursprünglich eingesetzten HCl-Menge verschwunden waren. Dies entspricht einer Nutzung des im polymeren Feststoff vorhandenen basischen Stickstoffs von 96,7%.

Beispiel 18

Mit 10 g des nach Beispiel 15 erhaltenen polymeren Amins wurde analog zu Beispiel 17 verfahren. Dabei konnten nach 2stündigem Rühren 93,8% des vorhandenen Stickstoffs genutzt werden.

**Patentansprüche**

1. Polymere, gegebenenfalls vernetzte, tertiäre oder sekundäre Organosiloxanamine der allgemeinen Formel

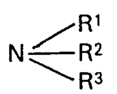 (1)

($R^1$ und $R^2$ = Gruppe der Formel

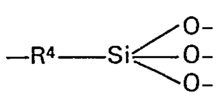 (2),

$R^4$ = Alkylen mit 1 bis 10 C-Atomen oder Cycloalkylen mit 5 bis 8 C-Atomen oder Reste der Formeln

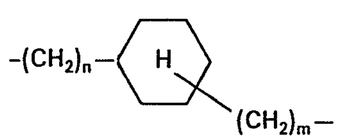

bzw. 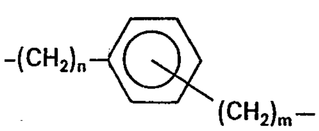

n = 1 bis 6 (am Stickstoff)
m = 0 bis 6 (am Silicium),
$R^1$ und $R^2$ gleich oder verschieden, wobei die freien Valenzen der Sauerstoffatome
entweder durch Siliciumatome weiterer Gruppen der Formel (2)
oder durch Siliciumatome weiterer Gruppen der Formel (2) und durch vernetzende Brückenglieder

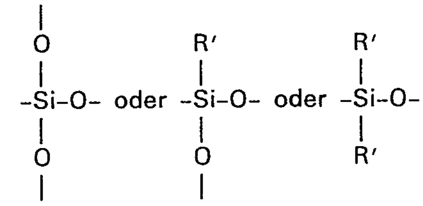 bzw.

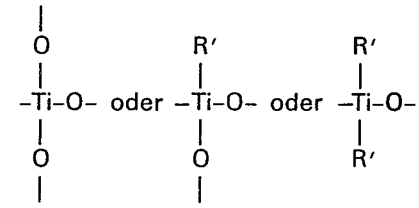 bzw.

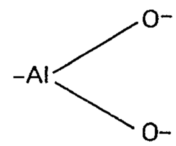 oder 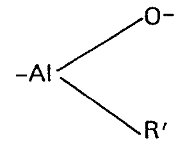

oder nur durch vernetzende Brückenglieder dieser Art abgesättigt sind;
$R'$ = Methyl oder Ethyl;
Verhältnis der Siliciumatome in (2) zu den Brückenatomen Silicium, Titan, Aluminium = 1:0 bis 1:10;
$R^3$ = $R^1$ oder $R^2$ oder Wasserstoff, eine lineare oder verzweigte Alkylgruppe mit 1 bis 10 C-Atomen oder eine Cycloalkylgruppe mit 5 bis 8 C-Atomen oder die Benzylgruppe).

2. Polymere Amine nach Anspruch 1, dadurch gekennzeichnet, dass $R^4$ eine lineare oder verzweigte Alkylengruppe ist.

3. Tertiäre polymere Amine nach Anspruch 1 oder 2, dadurch gekennzeichnet, dass $R^1$, $R^2$ und $R^3$ miteinander identisch sind.

4. Tertiäres polymeres Amin nach den Ansprüchen 1 bis 3, bestehend aus Einheiten

$N(CH_2\text{-}CH_2\text{-}CH_2SiO_{3/2})_3$

5. Verfahren zur Herstellung der polymeren tertiären Organosiloxanamine nach Ansprüchen 1 bis 4, dadurch gekennzeichnet, dass man 1 Mol eines primären Amins,
(dessen einer Substituent aus
einem Alkylrest mit 1 bis 10 C-Atomen,
einem Cycloalkylrest mit 5 bis 8 C-Atomen,
einem Benzylrest oder einer jeweils mit einer Trialkoxisilylgruppe mit 1 bis 5 C-Atomen enthaltenden Alkoxiresten verbundenen Alkylengruppe mit 1 bis 10 C-Atomen oder Cycloalkylengruppe mit 5 bis 8 C-Atomen oder einer Gruppe

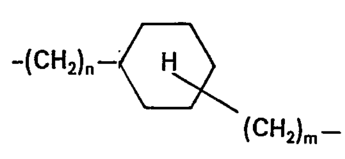

bzw. 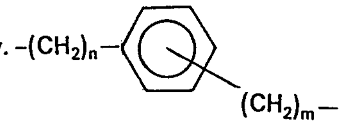

besteht;

n = 1 bis 6

m = 0 bis 6),

gegebenenfalls in einem Lösungsvermittler vorlegt, unter Rühren allmählich 1 Mol eines Halogenorganyltrialkoxisilans mit 1 bis 5 C-Atomen enthaltenden Alkoxigruppen zusetzt,

das Reaktionsgemisch unter fortgesetztem Rühren innerhalb von 5 bis 48 Stunden bei einer Temperatur von Raumtemperatur bis zu 300°C umsetzt

(Organylgruppierung des Silans

= Alkylen mit 1 bis 10 C-Atomen,

Cycloalkylen mit 5 bis 8 C-Atomen,

oder Reste der Formeln

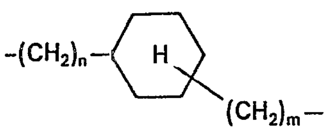

bzw. 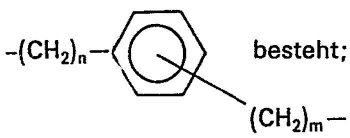 besteht;

n = 1 bis 6

m = 0 bis 6),

die gebildeten Quartärsalze, gegebenenfalls in einem Lösungsvermittler, mit mindestens stöchiometrischen Mengen einer organischen oder anorganischen Base deprotoniert,

das dabei gebildete anorganische Salz gegebenenfalls von der flüssigen Phase abtrennt,

letztere destillativ in die gebildeten Aminkomponenten trennt und

die überwiegend tertiäres Amin enthaltende Komponente, gegebenenfalls nach Zusatz eines Lösungsvermittlers und/oder eines Vernetzers der allgemeinen Formel

$Me(OR)_{2\text{-}4}R'_{0\text{-}2}$

bzw.

$Me(OR)_{2\text{-}3}R'_{0\text{-}1}$,

(Me = Si, Ti oder Al;

R = Alkyl mit 1 bis 5 C-Atomen;

R′ = Methyl oder Ethyl), mit mindestens der für vollständige Hydrolyse und Kondensation erforderlichen Menge Wasser umsetzt und den dabei gebildeten Feststoff trocknet, gegebenenfalls tempert, mahlt und/oder klassifiziert.

6. Verfahren zur Herstellung der polymeren tertiären Organosiloxanamine nach Ansprüchen 1 bis 4, dadurch gekennzeichnet, dass man 1 Mol eines sekundären Bis(trialkoxisilylorganyl)amins (Organylgruppe = $R^4$; Alkoxigruppen mit 1 bis 5 C-Atomen) mit 1 Mol eines Halogenorganyltrialkoxisilans, in welchem Organylgruppe und Alkoxigruppen dieselbe Bedeutung wie bei dem Amin-Reaktionspartner haben, oder eines linearen oder verzweigten Alkylhalogenids mit 1 bis 10 C-Atomen, eines Cycloalkylhalogenids mit 5 bis 8 C-Atomen oder Benzylhalogenid, umsetzt,

das gebildete Quartärsalz, gegebenenfalls in einem Lösungsvermittler, mit mindestens stöchiometrischen Mengen einer organischen oder anorganischen Base deprotoniert,

das dabei gebildete anorganische Salz gegebenenfalls von der flüssigen Phase abtrennt und das tertiäre Amin entsprechend Anspruch 5 weiterverarbeitet.

7. Verfahren zur Herstellung der polymeren tertiären Organosiloxanamine nach Anspruch 1 oder 2, dadurch gekennzeichnet, dass man 1 Mol eines sekundären Amins

(in dessen einem Trialkoxisilylorganylsubstituenten die Organylgruppe die Bedeutung $R^4$ hat und die Alkoxigruppen 1 bis 5 C-Atome aufweisen, während der andere Substituent aus einer linearen oder verzweigten Alkylgruppe mit 1 bis 10 C-Atomen oder einer Cycloalkylgruppe mit 5 bis 8 C-Atomen oder einer Benzylgruppe besteht)

mit 1 Mol eines Halogenorganyltrialkoxisilans

(in dem Organylgruppe und Alkoxigruppen dieselbe Bedeutung wie bei dem Trialkoxisilylorganylsubstituenten des Amin-Reaktionspartners haben)

umsetzt,

das gebildete Quartärsalz, gegebenenfalls in einem Lösungsvermittler, mit mindestens stöchiometrischen Mengen einer organischen oder anorganischen Base deprotoniert,

das dabei gebildete anorganische Salz gegebenenfalls von der flüssigen Phase abtrennt und das tertiäre Amin entsprechend Anspruch 5 weiterverarbeitet.

8. Verfahren nach Anspruch 5 bis 7, dadurch gekennzeichnet, dass man als Silane Jod-, Brom- oder Chlororganyltrialkoxisilane verwendet.

9. Verfahren nach den Ansprüchen 5 bis 8, dadurch gekennzeichnet, dass man Amine bzw. Halogenalkyltrialkoxisilane verwendet, in denen der Alkyl- und/oder Trialkoxisilylalkylrest am Aminstickstoff bzw. der Alkylrest im Halogenalkyltrialkoxisilan linear oder verzweigt ist.

10. Verfahren nach den Ansprüchen 5 bis 9, dadurch gekennzeichnet, dass man die Umsetzung des Amins mit dem Halogenorganyltrialkoxisilan bei 50–180°C vornimmt.

11. Verfahren nach den Ansprüchen 5 bis 10, dadurch gekennzeichnet, dass man zur Deprotonierung Natrium- oder Kaliummethylat-, -ethylat, -propylat, -butylat oder pentylat, Alkali- oder Erdalkalimetallhydroxid, Alkalimetallhydrogencarbonat, Alkalimetallcarbonat oder Ammoniak verwendet.

12. Verfahren nach Anspruch 11, dadurch gekennzeichnet, dass man die Deprotonierung in einem Alkohol, der zu den an den Siliciumatomen eines oder beider Reaktionspartner gebundenen Alkoxiresten korrespondiert, vornimmt.

13. Verfahren nach den Ansprüchen 5 bis 12, dadurch gekennzeichnet, dass man die Hydrolyse und Kondensation bei Raumtemperatur bis Rückflusstemperatur des Reaktionsgemisches durchführt.

14. Verfahren nach den Ansprüchen 5 bis 13, dadurch gekennzeichnet, dass man, gegebenenfalls im Vakuum, bei Raumtemperatur bis 250°C trocknet.

15. Verfahren nach den Ansprüchen 5 bis 14, dadurch gekennzeichnet, dass man, gegebenenfalls im Vakuum, mindestens eine Stunde bis zu vier Tagen bei 200–350°C tempert.

16. Verfahren zur Herstellung der sekundären polymeren Amine nach Anspruch 1 oder 2, dadurch gekennzeichnet, dass man Bis(trialkoxisilylorganyl)amin (in dem die Organylgruppe die Bedeutung $R^4$ hat und die Alkoxigruppen 1 bis 5 C-Atome aufweisen), gegebenenfalls nach Zusatz eines Lösungsvermittlers, mit mindestens der für vollständige Hydrolyse und Kondensation erforderlichen Menge Wasser umsetzt und den dabei gebildeten Feststoff entsprechend Anspruch 5 weiterverarbeitet.

17. Verfahren nach Anspruch 16, dadurch gekennzeichnet, dass man Amine verwendet, in denen die Trialkoxisilylalkylreste am Aminstickstoff linear oder verzweigt sind.

18. Verfahren nach Anspruch 16 oder 17, dadurch gekennzeichnet, dass man die Hydrolyse und Kondensation bei Raumtemperatur bis Rückflusstemperatur des Reaktionsgemisches durchführt.

19. Verfahren nach den Ansprüchen 16 bis 18, dadurch gekennzeichnet, dass man, gegebenenfalls im Vakuum, bei Raumtemperatur bis 250°C trocknet.

20. Verfahren nach den Ansprüchen 16 bis 19, dadurch gekennzeichnet, dass man, gegebenenfalls im Vakuum, mindestens eine Stunde bis zu vier Tagen bei 200–350°C tempert.

21. Verfahren zur Herstellung der tertiären polymeren Organosiloxanamine nach Anspruch 3 oder 4, dadurch gekennzeichnet, dass man Ammoniak mit Halogenorganyltrialkoxisilan (in dem die Organylgruppe die Bedeutung $R^4$ hat und die Alkoxigruppen 1 bis 5 C-Atome aufweisen), gegebenenfalls in Gegenwart eines Lösungsvermittlers bei erhöhten Temperaturen bis maximal 250°C und einem Druck, welcher der Summe der Partialdrucke der Komponenten der Reaktionsmischung bei der angewandten Reaktionstemperatur entspricht, umsetzt,

wobei man auf 1 Mol Halogenorganylsilan 1–20 Mole Ammoniak einsetzt,

überschüssigen Ammoniak zunächst weitgehend entfernt,

das gebildete anorganische Salz abtrennt,

Ammoniakreste sowie entstandene kleinere Mengen an primären und sekundären Aminen sowie gegebenenfalls eingesetzten Lösungsvermittler destillativ entfernt und

das verbleibende tertiäre Amin entsprechend Ansprüchen 5 sowie 14–16 weiterverarbeitet.

22. Verfahren nach Anspruch 21, dadurch gekennzeichnet, dass man die Umsetzung bei ca. 150°C durchführt.

23. Verfahren nach Anspruch 21 oder 22, dadurch gekennzeichnet, dass man als Silan Jod-, Brom- oder Chlororganyltrialkoxisilan verwendet.

24. Verfahren nach den Ansprüchen 21 bis 23, dadurch gekennzeichnet, dass man Halogenalkyltrialkoxisilan verwendet, in denen der Alkylrest linear oder verzweigt ist.

25. Verwendung der polymeren tertiären und sekundären Amine zur Entfernung von Säuren aus Flüssigkeiten und Gasen.

## Claims

1. Polymeric, optionally cross-linked, tertiary or secondary organosiloxane amines corresponding to the general formula

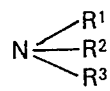
(1)

($R^1$ and $R^2$ represent a group corresponding to the formula

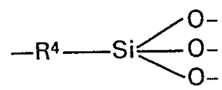
(2),

$R^4$ represents alkylene having from 1 to 10 carbon atoms or cycloalkylene having from 5 to 8 carbon atoms or radicals corresponding to the formulae

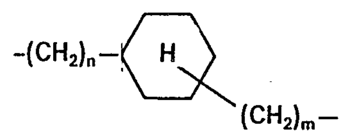
or

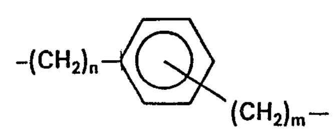

n is from 1 to 6 (attached to the nitrogen), and
m is from 0 to 6 (attached to the silicon),
$R^1$ and $R^2$ are the same or different and the free valencies of the oxygen atoms are saturated either by silicon atoms of further groups corresponding to formula (2)
or by silicon atoms of further groups corresponding to formula (2) and by cross-linking bridge members,

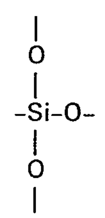
or
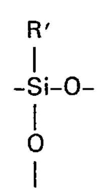
or
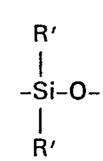
or

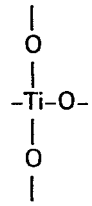 or 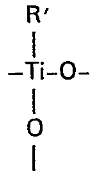 or 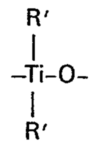 or

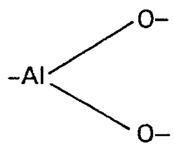 or 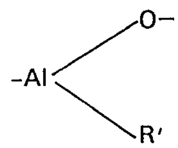

or are only saturated by cross-linking bridge members of this type;
R′ represents methyl or ethyl, the ratio of the silicon atoms in (2) to the bridge atoms silicon, titanium and aluminium is from 1:0 to 1:10;
$R^3$ represents $R^1$ or $R^2$ or hydrogen, a linear or branched alkyl group having from 1 to 10 carbon atoms or a cycloalkyl group having from 5 to 8 carbon atoms or a benzyl group).

2. Polymeric amines according to claim 1, characterised in that $R^4$ is a linear or branched alkylene group.

3. Tertiary polymeric amines according to claims 1 or 2, characterised in that $R^1$, $R^2$ and $R^3$ are identical to each other.

4. Tertiary polymeric amines according to claims 1 to 3, consisting of units

$N(CH_2\text{-}CH_2\text{-}CH_2SiO_{3/2})_3$

5. A process for the production of the polymeric tertiary organosiloxane amines according to claims 1 to 4, characterised in that 1 mol of a halo-organyltrialkoxy silane having alkoxy groups containing from 1 to 5 carbon atoms is gradually added with stirring to 1 mol of a primary amine,
(one substituent of which consists of an alkyl radical having from 1 to 10 carbon atoms, a cycloalkyl radical having from 5 to 8 carbon atoms, a benzyl radical or an alkylene group having from 1 to 10 carbon atoms which is bound in each case to a trialkoxysilyl group having alkoxy radical containing from 1 to 5 carbon atoms or a cycloalkylene group having from 5 to 8 carbon atoms or a group

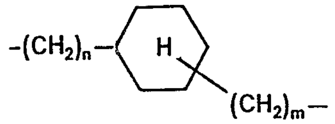 or

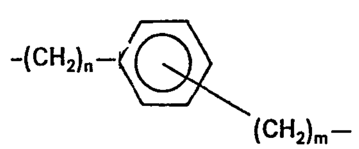

n is from 1 to 6
m is from 0 to 6),

optionally placed in a solution aid, the reaction mixture is reacted with continued stirring for from 5 to 48 hours at a temperature of from room temperature to 300°C (organyl group of the silane is
alkylene having from 1 to 10 carbon atoms,
cycloalkylene having from 5 to 8 carbon atoms,
or radicals corresponding to formulae

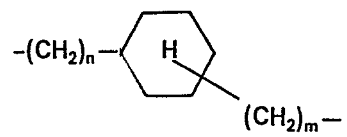 or

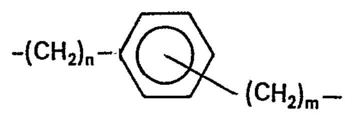

n is from 1 to 6,
m is from 0 to 6),

the quaternary salts which have been formed, are deprotonized optionally in a solution aid with at least stoichiometric quantities of an organic or inorganic base,
the resulting inorganic salt is optionally separated from the liquid phase,
the latter is separated by distillation into the resulting amine components and the substantially tertiary amine-containing component,
optionally after addition of a solution aid and/or a cross-linking agent corresponding to the general formula
$Me(OR)_{2\text{-}4}R'_{0\text{-}2}$
or
$Me(OR)_{2\text{-}3}R'_{0\text{-}1}$,
(Me is Si, Ti or Al;
R represents alkyl having from 1 to 5 carbon atoms; R′ represents methyl or ethyl),
is reacted with at least the quantity of water necessary for complete hydrolysis and condensation and the solid material which is thereby formed is dried, optionally annealed, ground and/or classified.

6. A process for the production of the polymeric tertiary organosiloxane amines according to claims 1 to 4, characterised in that 1 mol of a secondary bis(trialkoxysilorganyl)amine
(organyl group = $R^4$; alkoxy groups having from 1 to 5 carbon atoms)
is reacted with 1 mol of a halo-organyltrialkoxysilane, in which the organyl group and the alkoxy groups are the same as the amine reaction constituents, or of a linear or branched alkyl halide having from 1 to 10 carbon atoms, a cycloalkyl halide having from 5 to 8 carbon atoms or benzyl halide,
the resulting quaternary salt is deprotonized optionally in a solution aid with at least stoichiometric quantities of an organic or inorganic base,
the resulting inorganic salt is optionally separated from the liquid phase and the tertiary amine is subsequently processed as in claim 5.

7. A process for the production of the polymeric tertiary organosiloxane amines according to claims 1 or 2, characterised in that 1 mol of a secondary amine
(in the one trialkoxysilylorganyl substituent of which the organyl group is as defined for $R^4$ and the alkoxy groups have from 1 to 5 carbon atoms, while the other substituent consists of a linear or branched alkyl group having from 1 to 10 carbon atoms or a cycloalkyl group having from 5 to 8 carbon atoms or a benzyl group)
is reacted with 1 mol of a halo-organyltrialkoxysilane
(in which the organyl group and the alkoxy groups are as defined for the trialkoxysilylorganyl substituent of the amine reaction constituent), the resulting quaternary salt is deprotonized optionally in a solution aid with at least stoichiometric quantities of an organic or inorganic base,
the resulting salt is optionally separated from the liquid phase and the tertiary amine is subsequently processed as in claim 5.

8. A process according to claims 5 to 7, characterised in that iodo-, bromo- or chloro-organyltrialkoxysilanes are used as silanes.

9. A process according to claims 5 to 8, characterised in that amines of halo-alkyltrialkoxysilanes are used, in which the alkyl- and/or trialkoxysilylalkyl radical on the amine nitrogen or the alkyl radical in the haloalkyltrialkoxysilane is linear or branched.

10. A process according to claims 5 to 9, characterised in that the amine is reacted with the halo-organyltrialkoxysilane at a temperature of from 50 to 180°C.

11. A process according to claims 5 to 10, characterised in that sodium or potassium methylate, -ethylate, -propylate, -butylate or -pentylate, alkali metal or alkaline earth metal hydroxide, alkali metal hydrogen carbonate, alkali metal carbonate or ammonia are used for deprotonization.

12. A process according to claim 11, characterised in that deprotonization is carried out in an alcohol corresponding to the alkoxy radicals which are bound to the silicon atoms of one or both reaction constituents.

13. A process according to claims 5 to 12, characterised in that hydrolysis and condensation are carried out at a temperature of from room temperature to the reflux temperature of the reaction mixture.

14. A process according to claims 5 to 13, characterised in that drying is optionally carried out under vacuum, at a temperature of from room temperature to 250°C.

15. A process according to claims 5 to 14, characterised in that annealing is carried out for from at least 1 hour to 4 days at from 200 to 350°C, optionally under vacuum.

16. A process for the production of the secondary polymeric amines according to claims 1 or 2, characterised in that the bis(trialkoxysilylorganyl) amine (in which the organyl group is as defined for $R^4$ and the alkoxy groups have from 1 to 5 carbon atoms), optionally after addition of a solution aid, is reacted with at least the quantity of water required for complete hydrolysis and condensation, and the resulting solid material is subsequently processed as in claim 5.

17. A process according to claim 16, characterised in that amines are used in which the trialkoxysilylalkyl radicals on the amine nitrogen are linear or branched.

18. A process according to claims 16 or 17, characterised in that hydrolysis and condensation are carried out at a temperature of from room temperature to the reflux temperature of the reaction mixture.

19. A process according to claims 16 to 18, characterised in that drying is carried out at a temperature of from room temperature to 250°C, optionally under vacuum.

20. A process according to claims 16 to 19 characterised in that annealing is carried out, optionally under vacuum, for from at least 1 hour to 4 days at from 200 to 350°C.

21. A process for the production of the tertiary polymeric organosiloxane amines according to claim 3 or 4, characterised in that ammonia is reacted with halo-organyltrialkoxysilane (in which the organyl group is as defined for $R^4$ and the alkoxy groups have from 1 to 5 carbon atoms), optionally in the presence of a solution aid at elevated temperatures to at most 250°C and under a pressure which corresponds to the sum of the partial pressures of the components of the reaction mixture at the reaction temperature which is used, and from 1 to 20 mols of ammonia are used per mol of halo-organylsilane,
excess ammonia being firstly substantially removed, the resulting inorganic salt is separated, ammonia radicals and resulting small quantities of primary and secondary amines and solution aids which are optionally used are removed by distillation and the remaining tertiary amine is subsequently processed as in claim 5 and claims 14 to 16.

22. A process according to claim 21, characterised in that the reaction is carried out at a temperature of about 150°C.

23. A process according to claims 21 or 22, characterised in that iodo-, bromo-, or chloro-organyltrialkoxysilane is used as silane.

24. A process according to claims 21 to 23, characterised in that halo-alkyltrialkoxysilane is used in which the alkyl radical is linear or branched.

25. The use of the polymeric tertiary and secondary amines for removing acids from liquids and gases.

**Revendications**

1. Organosiloxanamines polymères, éventuellement réticulées, tertiaires ou secondaires, répondant à la formule générale:

lement réticulées, tertiaires ou secondaires, répondant à la formule générale:

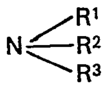 (1)

($R^1$ et $R^2$ = groupes de formule:

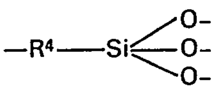 (2),

$R^4$ = alcoyles avec 1 à 10 atomes de C ou cycloalcoyles avec 5 à 8 atomes de C, ou restes des formules:

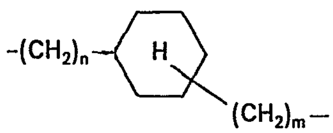 ou

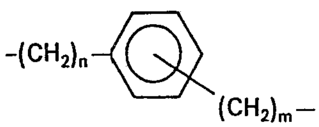

n = 1 à 6 (sur l'azote)
m = 0 à 6 (sur le silicium)
$R^1$ et $R^2$ étant semblables ou différents, les valences libres des atomes d'oxygène étant saturées
soit par des atomes de silicium d'autres groupes de formule (2)
soit par des atomes de silicium d'autres groupes de formule (2) et par des groupes formant ponts réticulants

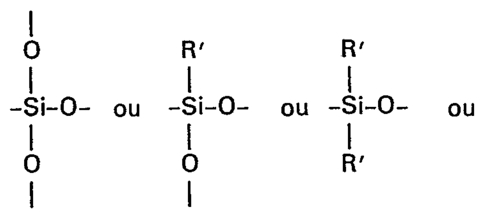

ou ou ou

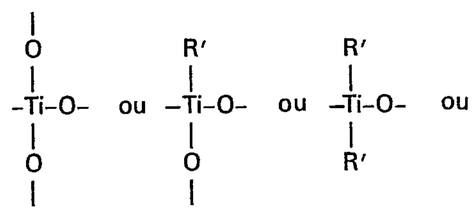

ou ou ou

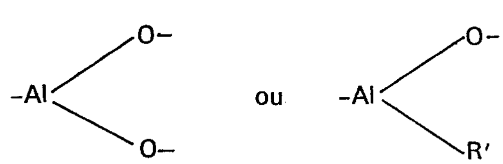

ou

ou seulement par les groupes formant ponts réticulants de ce type,
R' = méthyle ou éthyle
Rapport des atomes de silicium contenus dans (2) aux atomes des ponts, silicium, titane, aluminium = 1:0 à 1:10;
$R^3$ = $R^1$ ou $R^2$ ou hydrogène, un groupe alcoyle, linéaire ou ramifié à 1 à 10 atomes de C, ou un groupe cycloalcoyle avec 5 à 8 atomes de C, ou le groupe benzyl.

2. Amine polymère suivant la revendication 1, caractérisée en ce qu $R^4$ est un groupe alkylène linéaire ou ramifié.

3. Amine polymère tertiaire, suivant l'une des revendications 1 ou 2, caractérisée en ce que $R^1$, $R^2$ et $R^3$ sont identiques entre eux.

4. Amine polymère tertiaire suivant l'une des revendications 1 à 3 constitué par des groupes

$N(CH_2\text{-}CH_2\text{-}CH_2SiO_{3/2})_3$

5. Procédé pour la fabrication des organosiloxanamines, polymères tertiaires suivant les revendications 1 à 4, caractérisé en ce que l'on met en place une molécule d'une amine primaire,
(dont un substituant est constitué de
un reste alcoyle avec 1 à 10 atomes de C,
un reste cycloalcoyle avec 5 à 8 atomes de C,
un reste benzyl, ou un groupe alkylène avec 1 à 10 atomes de C, relié chaque fois avec des restes alcoxy contenant un groupe trialcoxysilyl avec 1 à 5 atomes de C, ou un groupe cycloalkylène avec 5 à 8 atomes de C, ou un groupe

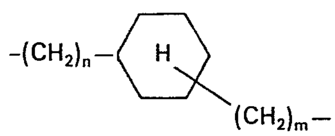 ou

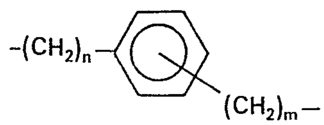

n = 1 à 6
m = 0 à 6
éventuellement dans un solvant, ajoute tout en agitant, progressivement, 1 mole d'un halogénorganyltrialcoxysilane avec des groupes alcoxy contenant 1 à 5 atomes de C, fait réagir le mélange réactionnel, en poursuivant l'agitation pendant une durée de 5 à 48 heures, à une température pouvant aller de la température ambiante jusqu'à 300°C (groupage organyl du silane = alcoyle avec 1 à 10 atomes de C, cycloalcoyle avec 5 à 8 atomes de C, ou restes des formules

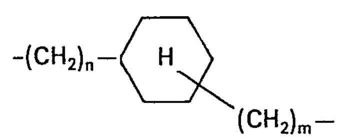 ou

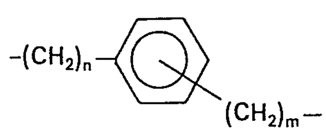

n = 1 à 6
m = 0 à 6),
déprotonise les sels quaternaires formés, éventuellement dans un solvant, avec au moins des quantités stœchiométriques d'une base organique ou minérale
sépare éventuellement, de la phase liquide, le sel minéral qui s'est formé,
sépare par distillation la phase liquide en composants aminés formés, et fait réagir le composant contrenant en majeure partie l'amine tertiaire éventuellement après addition d'un solvant et/ou d'un réticulant de formule générale:

$Me(OR)_{2\text{-}4}R'_{0\text{-}2}$
ou
$Me(OR)_{2\text{-}3}R'_{0\text{-}1}$,
(Me = Si, Ti, ou Al;
R = Alcoyle avec 1 à 5 atomes de C;
R' = méthyle ou éthyle),
avec au moins la quantité d'eau nécessaire pour une hydrolyse et une condensation totales, et sèche la matière solide qui s'est formée, lui fait subir éventuellement un traitement thermique, la broie et/ou la trie par grosseurs.

6. Procédé pour la fabrication des organosiloxanamines tertiaires polymères suivant les revendications 1 à 4, caractérisé en ce que l'on fait réagir 1 mole d'une bis(trialcoxysilylorganyl)amine (groupe organyl = $R^4$; groupes alcoxy avec 1 à 5 atomes de C), avec 1 mole d'un halogénorganyltrialcoxysilane, dans lequel le groupe organyl et les groupes alcoxy sont les mêmes que dans le partenaire amine de la réaction, ou d'un alcoylhalogénure, linéaire ou ramifié, avec 1 à 10 atomes de carbone, d'un cycloalcoylhalogénure avec 5 à 8 atomes de C ou de benzylhalogénure, déprotonise le sel quaternaire formé, éventuellement dans un solvant, avec au moins la quantité stœchiométrique d'une base organique ou minérale, sépare éventuellement le sel minéral, qui se serait formé, de la phase liquide et poursuit le traitement de l'amine tertiaire comme il est prescrit dans la revendication 5.

7. Procédé pour la fabrication des organosiloxanamines tertiaires polymères suivant les revendications 1 ou 2, caractérisé en ce que l'on fait réagir une mole d'une amine secondaire
(dans lequel le substituant trialcoxysilyl du groupe organyl a la signification $R^4$ et où les groupes alcoxy comportent 1 à 5 atomes de C, pendant que l'autre substituant est constitué par un groupe alcoyle linéaire ou ramifié avec 1 à 10 atomes de C, ou un groupe cycloalcoyle avec 5 à 8 atomes de C ou un groupe benzyl),
avec 1 mole d'un halogénorganyltrialcoxysilane, (dans lequel le groupe organyl et les groupes alcoxy ont la même signification que dans les substituants trialcoxysilylorganyl du partenaire aminé de la réaction), déprotonise le sel quaternaire formé, éventuellement dans un solvant avec au moins la quantité stœchiométrique d'une base organique ou minérale,
sépare éventuellement le sel minéral formé de la phase liquide et continue le traitement de l'amine tertiaire comme il est prescrit dans la revendication 5.

8. Procédé suivant les revendications 5 à 7, caractérisé en ce que l'on utilise comme silane, l'iodo-, bromo- ou chloroorganyltrialcoxysilane.

9. Procédé suivant les revendications 5 à 8, caractérisé en ce qu'on utilise des amines ou des halogénalcoyltrialcoxysilanes dans lesquelles le reste alcoyl- et/ou trialcoxysilylalcoyle qui est sur l'azote de l'amine, ou le reste alcoyle qui est dans l'halogénalcoyltrialkoxysilane est linéaire ou ramifié.

10. Procédé suivant l'une des revendications 5 à 9, caractérisé en ce qu'on effectue la réaction de l'amine avec l'halogénorganyltrialcoxysilane à 50 à 180°C.

11. Procédé suivant les revendications 5 à 10, caractérisé en ce que l'on utilise, pour la déprotonisation, les méthylate, éthylate, propylate, butylate ou pentylate de sodium ou de potassium, les hydroxydes de métaux alcalins ou alcalino-terreux, carbonates acides de métaux alcalins, carbonates de métaux alcalins ou le gaz ammoniac.

12. Procédé suivant la revendication 11, caractérisé en ce que l'on exécute la déprotonisation dans un alcohol, qui correspond aux restes alcoxy fixés sur les atomes de silicium de l'un ou des deux partenaires de la réaction.

13. Procédé suivant l'une des revendications 5 à 12, caractérisé en ce que l'on effectue l'hydrolyse et la condensation à une température allant de la température ambiante à la température de reflux du mélange réactionnel.

14. Procédé suivant l'une des revendications 5 à 13, caractérisé en ce que l'on sèche éventuellement sous vide entre la température ambiante et 250°C.

15. Procédé suivant les revendications 5 à 14, caractérisé en ce que l'on étuve éventuellement sous vide, pendant au moins une heure et jusqu'à quatre jours, à 250 à 350°C.

16. Procédé pour la fabrication d'amines secondaires polymères suivant la revendication 1 ou 2, caractérisé en ce qu'on fait réagir une bis(trialcoxysilylorganyl)amine (dans laquelle le groupe organyl a la signification $R^4$, et les groupes alcoxy présentent 1 à 5 atomes de C), éventuellement après addition d'un solvant, avec au moins la quantité d'eau nécessaire pour une hydrolyse et une condensation complètes, et continue le traitement de la matière solid ainsi produite suivant les prescriptions de la revendication 5.

17. Procédé suivant la revendication 16, caractérisé en ce que l'on utilise une amine dans laquelle les restes trialcoxysilylalcoyle fixés sur l'azote de l'amine sont linéaires ou ramifiés.

18. Procédé suivant l'une des revendications 16 ou 17, caractérisé en ce que l'on effectue l'hydrolyse et la condensation entre la température ambiante et celle de reflux du mélange réactionnel.

19. Procédé suivant les revendications 16 à 18, caractérisé en ce que l'on sèche, éventuellement

sous vide, entre la température ambiante et 250°C.

20. Procédé suivant les revendications 16 à 19, caractérisé en ce que l'on étuve éventuellement sous vide, au moins une heure et jusqu'à quatre jours, à 200 à 350°C.

21. Procédé pour la fabrication des organosiloxanamines tertiaires polymères suivant les revendications 3 ou 4, caractérisé en ce que l'on fait réagir du gaz ammoniac avec un halogénorganyltrialcoxysilane (dans lequel le groupe organyl a la signification de $R^4$ et les groupes alcoxy comportent de 1 à 5 atomes de C), éventuellement en présence d'un solvant, à une température qui peut se monter jusqu'à 250°C au maximum, et sous une pression qui correspond à la somme des pressions partielles des composants du mélange réactionnel à la température utilisée pour la réaction,
pendant que l'on met en œuvre, pour 1 mole d'halogénorganylsilane, 1 à 20 moles de gaz ammoniac,
élimine ensuite, d'abord, dans une large mesure l'excès de gaz ammoniac, sépare le sel minéral formé,
sépare par distillation les restes de gaz ammoniac, ainsi que de petites quantités d'amines primaires et secondaires qui se sont formées et éventuellement le solvant mis en œuvre, et
continue le traitement de l'amine tertiaire restante suivant les prescriptions des revendications 5, ainsi que 14 à 16.

22. Procédé suivant la revendication 21, caractérisé en ce que l'on effectue la réaction à environ 150°C.

23. Procédé suivant l'une des revendications 21 ou 22, caractérisé en ce que l'on utilise, comme silane, l'une des iodo-, bromo- ou chloroorganyltrialcoxysilanes.

24. Procédé suivant les revendications 21 à 23, caractérisé en ce qu'on utilise un halogénalcoytrialcoxysilane dans lequel le reste alcoyle est linéaire ou ramifié.

25. Utilisation des amines tertiaires et secondaires polymères pour éliminer des acides de liquides et de gaz.